(19) Europäisches Patentamt
European Patent Office
Office européen des brevets

(11) **EP 4 668 218 A1**

(12) **EUROPEAN PATENT APPLICATION**
published in accordance with Art. 153(4) EPC

(43) Date of publication:
**24.12.2025 Bulletin 2025/52**

(21) Application number: **24756227.5**

(22) Date of filing: **07.02.2024**

(51) International Patent Classification (IPC):
*G06T 19/20* (2011.01)

(52) Cooperative Patent Classification (CPC):
**G06T 7/70; G06T 19/00; G06T 19/20**

(86) International application number:
**PCT/CN2024/076622**

(87) International publication number:
**WO 2024/169854 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023 CN 202310180477**

(71) Applicant: **Beijing Zitiao Network Technology Co.,
Ltd.
Beijing 100190 (CN)**

(72) Inventors:
• **ZHU, Xin
Beijing 100028 (CN)**
• **LUO, Yuxuan
Beijing 100028 (CN)**

(74) Representative: **Grünecker Patent- und
Rechtsanwälte
PartG mbB
Leopoldstraße 4
80802 München (DE)**

(54) **IMAGE RENDERING METHOD AND APPARATUS, AND ELECTRONIC DEVICE AND STORAGE MEDIUM**

(57)    The application provides a method, apparatus, electronic device, and storage medium for image rendering including: obtaining an accessory carrier image, and performing key point prediction on the accessory carrier image to generate a key point result; determining a six degrees of freedom posture value based on the key point result, a predetermined stereoscopic point data, and a device parameter; then adjusting a posture of a virtual accessory carrier model, where the virtual accessory carrier model is mounted with a virtual accessory model, and obtaining an accessory image of the virtual accessory model after posture adjustment based on the device parameter; and rendering the accessory image onto the accessory carrier image. In this application, the key point and the six degrees of freedom posture value of the accessory carrier are determined, the posture of the virtual accessory carrier model is adjusted by the six degrees of freedom posture value, so as to simulate the real posture of the accessory carrier. And then the image of the virtual accessory model is obtained based on the image acquisition device set by the device parameter, simulating the real wearing effect of the accessory at a specific angle, finally enhancing the rendering effect of the accessory worn by the carrier during occlusion and motion.

FIG. 1

## Description

This application claims priority to Chinese Patent Application No. 202310180477.1, filed on February 17, 2023 and entitled "METHOD, APPARATUS, DEVICE AND STORAGE MEDIUM FOR IMAGE RENDERING", the entirety of which is incorporated herein by reference.

## FIELD

The application relates to the technical field of image processing, in particular to a method, an apparatus, an electronic device, and a storage medium for image rendering.

## BACKGROUND

With the rapid development of science and technology, people have higher requirements for substance level and user experience, and if the user may try on accessories (rings, glasses, earrings, watches, etc.) virtually before purchasing them, experiencing various try-on effects, it would greatly enhances the user's real experience and increases their interest in purchasing.

## SUMMARY

In view of this, the application provides a method, an apparatus, an electronic device, and a storage medium for image rendering.

This application provides a method for image rendering, including:

obtaining an accessory carrier image, and performing key point prediction on the accessory carrier image to generate a key point result;

determining a six degrees of freedom posture value based on the key point result, a predetermined stereoscopic point data, and a device parameter;

adjusting a posture of a virtual accessory carrier model based on the six degrees of freedom posture value, wherein the at least one virtual accessory carrier model is mounted with a virtual accessory model, and obtaining an accessory image of the virtual accessory model after posture adjustment based on the device parameter;

rendering the accessory image onto the accessory carrier image.

In some embodiments, obtaining the accessory image of the virtual accessory model after posture adjustment based on the device parameter includes:

performing the posture adjustment on each virtual accessory carrier model based on the six degrees of freedom posture value to determine an occlusion relationship between the virtual accessory model and the virtual accessory carrier model;

obtaining, based on capturing angle determined by the device parameter, the accessory image of the virtual accessory model after occlusion processing based on the occlusion relationship.

In some embodiments, obtaining the accessory carrier image further includes:

obtaining an input image, performing accessory carrier recognition on the input image;

in response to recognizing the accessory carrier, cropping the input image based on a position of the accessory carrier, and performing normalization processing on the cropped input image to obtain the accessory carrier image.

In some embodiments, performing the normalization processing on the cropped input image to obtain the accessory carrier image includes:

in response to the accessory carrier being a mirror carrier of a predetermined standard carrier, flipping the cropped input image to obtain the accessory carrier image.

In some embodiments, performing the accessory carrier recognition on the input image includes:

determining whether the accessory carrier is recognized in a previous frame input image for the input image;

in response to recognizing the accessory carrier, cropping the input image based on the positioning of the accessory carrier in the previous frame input image.

In some embodiments, obtaining the accessory carrier image includes:

in response to obtaining a request for adding a virtual accessory, determining an accessory carrier corresponding to the virtual accessory, and generating prompt information for the accessory carrier, enabling the accessory carrier to move and/or adjust its posture based on the prompt information;

obtaining an image of the accessory carrier through an image acquisition device to generate the accessory carrier image.

In some embodiments, performing the key point prediction on the accessory carrier image includes:
performing the key point prediction on the accessory carrier image based on a predetermined key point prediction model.

In some implementations, the method further includes training the key point prediction model by the following methods:

obtaining a training image and a target model corresponding to the training image;

projecting, based on the device parameter and a standard six degrees of freedom posture value, the training stereoscopic point data on the target model to obtain a key point ground truth value;

training the key point prediction model with the training image and the key point ground true value until a predetermined training condition is met.

In some embodiments, if the accessory carrier image is an image sequence, the generation of the key point result includes:
performing smoothing processing on the key point result based on optical flow information and/or temporal information of the accessory carrier image.

In some implementations, determining the six degrees of freedom posture value based on the key point result, the predetermined stereoscopic point data, and the device parameter includes:

projecting, based on the device parameter, the stereoscopic point data to obtain a projection result;

calculating an error value between the projection result and the key point result;

adjusting the stereoscopic point data, recalculating the error value, and obtaining by calculating, based on the stereoscopic point data corresponding to a minimum error value, the six degrees of freedom posture value.

In some implementations, after obtaining by calculating the six degrees of freedom posture value, the method further includes:
performing smoothing processing on a rotation value in the six degrees of freedom posture value with an interpolation algorithm, and/or performing smoothing processing on a translation value in the six degrees of freedom posture value with a temporal weighted algorithm.

Based on the same concept, the application further provides an apparatus for image rendering, including:

an obtaining module, configured to obtain an accessory carrier image, and performing key point prediction on the accessory carrier image to generate a key point result;

a calculation module, configured to determine a six degrees of freedom posture value based on the key point result, a predetermined stereoscopic point data, and a device parameter;

an adjusting module, configured to adjust a posture of a virtual accessory carrier model based on the six degrees of freedom posture value, wherein the at least one virtual accessory carrier model is mounted with a virtual accessory model, and obtaining an accessory image of the virtual accessory model after posture adjustment based on the device parameter;

a rendering module, configured to render the accessory image onto the accessory carrier image.

Based on the same concept, the application further provides an electronic device, including a memory, a processor, and a computer program stored in the memory and executable on the processor, where the program, when executed by the processor, performs any one of the methods described above.

Based on a same concept, the application further provides a non-transitory computer-readable storage medium storing computer instructions for causing the computer to perform any one of the methods described above.

**BRIEF DESCRIPTION OF DRAWINGS**

In order to more clearly illustrate the technical solutions in the embodiments of this application or related technologies, the accompanying drawings that need to be used in the description of the embodiments or related technologies are briefly described below, and obviously, the drawings in the following description are merely embodiments of this application, and for those of ordinary skill in the art, other drawings may be obtained based on these drawings without creative work.

FIG. 1 is a schematic flowchart of a method for image rendering according to an embodiment of this application;
FIG. 2 is a schematic structural diagram of an apparatus for image rendering according to an embodiment of this application;
FIG. 3 is a schematic structural diagram of an electronic device according to an embodiment of this application.

## DETAILED DESCRIPTION

In order to make the objectives, technical solutions and advantages of this specification clearer, the specification is further described in detail below with reference to the accompanying drawings.

It would be understood that, before using the technical solutions disclosed by the embodiments in the application, the types, the usage scope, the usage scenarios and the like, of personal information related to the application involved in the application should be notified to the user in an appropriate manner according to the relevant laws and regulations, and the authorization of the user should be obtained.

For example, in response to an active request being received from a user, a prompt message is sent to the user to explicitly prompt the user that the operation requested by the user would need acquisition and use of personal information of the user. As such, according to prompt information, users may choose whether to provide personal information to the software or hardware, such as an electronic device, application, server or storage medium, that performs the operations of the technical solution in the application.

As an optional but non-limiting implementation, in response to the active request being received from the user, the prompt information may be sent to the user via, for example, a pop-up window in which the prompt information may be presented in text. In addition, the pop-up window may also contain selection controls configured for the user to choose "agree" or "disagree" to provide the personal information to the electronic device.

It would be appreciated that the above process of notification and acquisition of user authorization is only an example and do not limit the implementations in the application. Other methods that meet relevant laws and regulations may also be applied to the implementations in the application.

It would be appreciated that the data involved in this technical solution (including but not limited to the data itself, data acquisition or use) shall comply with the requirements of corresponding laws, regulations and relevant provisions.

In order to make the objectives, technical solutions and advantages of the specification clearer, the specification is further described in detail below with reference to the accompanying drawings.

It should be noted that, unless otherwise defined, the technical terms or scientific terms used in the embodiments of the application should be understood in their usual meaning by those skilled in the art to which this application belongs. The terms "first", "second" and similar terms used in the embodiments of the application do not represent any order, quantity, or importance, but are merely used to distinguish different components. The terms "comprising" or "including" and the similar terms means that the elements, objects, or method steps preceding these terms encompass the elements, objects, or method steps (along with their equivalents) appearing after these terms, without excluding other elements, objects, or method steps. The terms "connected" or "coupled" and similar terms are not limited to physical or mechanical connections, but may include electrical connections, whether direct or indirect. The terms "upper", "lower", "left", "right" and the like are only used to represent relative position relationships, and the relative position relationship may also change accordingly when the absolute position of the described object changes.

As described in the background section, with rapid development of science and technology, virtual reality technology and augmented reality technology are getting more and more widely applied. Augmented Reality (AR) is a new technology that "seamlessly" integrates real world information and virtual world information. AR simulates and emulates, through various scientific techniques, physical information (information such as visual, sound, taste, tactile and the like) that originally would be difficult to experience within a certain time and spatial range in the real world, and then overlays it. Then the virtual information may be applied to the real world and perceived by human senses, thereby achieving a sensory experience that transcends reality. And the real environment and virtual objects may be overlaid in real-time into the same scene or space, causing them to coexist simultaneously. Current AR technology may be widely applied in various fields.

With the development of Internet technologies, more and more commodities are sold through a network, including items such as accessories, clothes and the like that may be configured to the body. These items may usually need to be tried on or fitted, so that the consumers may determine whether the items are suitable for themselves. However, network sales generally may only show an item picture, and cannot provide real try-on and fitting services, which has led to the emergence of AR virtual try-on and fitting services in the field. Currently, some applications and web services capable of achieving AR accessories try-on have emerged in the market. These apps and webpages may simulate the wearing of the virtual accessories in real time, and some may even support switching the wearing of the same accessories on different parts (for example, switching the try-on of a ring on different fingers). However, due to the high degree of freedom and serious self-occlusion of some parts of the human body (for example, hands, fingers, and the like), it is difficult for the existing technology to meet the requirements of AR fitting on the realistic experience, such as poor fit, and failure to follow finger movements.

With reference to the above practical situation, the embodiment of this application provides a method for image rendering. In this application, the key point and the six degrees of freedom posture value of the accessory carrier are calculated, the posture of a virtual model corresponding to the accessory carrier is adjusted based on the six degrees of freedom posture value, the real posture of the accessory carrier is simulated by the virtual model, and then the image of the accessory model mounted on the virtual model is obtained based on the camera parameters. In this manner, this application may simulate the real wearing effect of the accessory, enhancing the rendering effect of the accessory worn by the carrier during occlusion and motion, such that the virtual accessory may be well fitted under the condition of severe self-occlusion or rapid motion, thus improving the user experience during the try-on process.

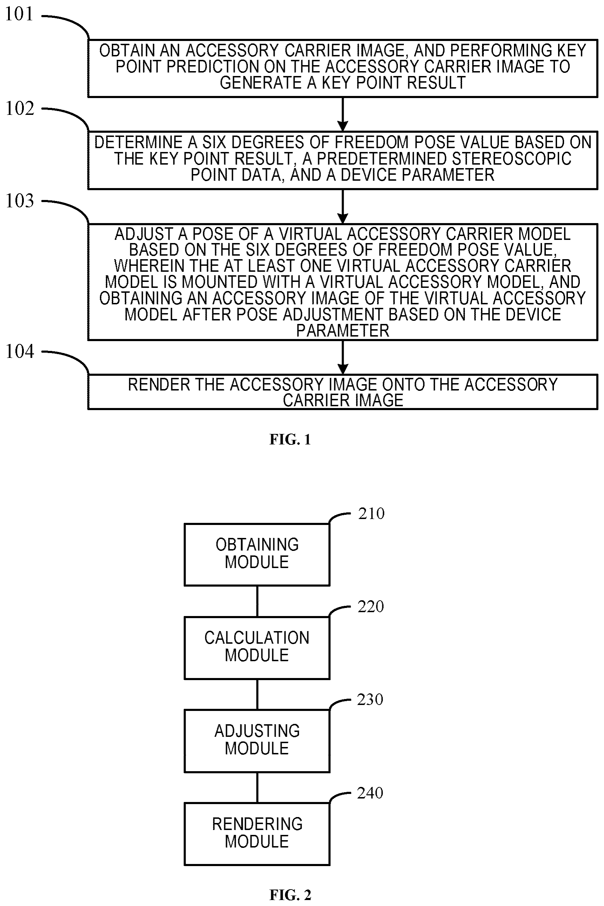

FIG. 1 is a schematic flowchart of a method for image rendering according to this application. The method specifically includes:

Step 101, an accessory carrier image is obtained, and performing key point prediction on the accessory carrier image to generate a key point result.

In some embodiments, the accessory carrier may refer to a carrier for carrying an accessory, where the accessory may be jewelry such as a ring, earring, necklace, bracelet, and the like, or a brooch, belt, and the like, mounted on clothing. And a corresponding carrier may be a finger, ear, neck, wrist, chest and chest clothing, waist and waist clothing, and the like. In a specific embodiment, the corresponding accessory carrier may be determined based on the accessory selected by a user, for example, if the accessory selected by the user is a ring, the corresponding accessory carrier is a finger. The manner for obtaining an accessory carrier image may be through directly input by the user, for example, the user may directly capture the corresponding carrier through a camera, or the user may directly input the image file containing the corresponding carrier; or may be retrieved in a network database through a network. At the same time, the accessory carrier image may be a single-frame image, for example a picture and the like, or may be a multi-frame image sequence, for example a video and the like. The specific image representation form may be flexibly adjusted according to a specific application scenario.

Then, performing key point prediction on the accessory carrier image, where the key point is used for accurately identifying body parts or an entity, for example facial recognition. First, facial key point features are obtained(these key points are generally preset, or determined based on a predetermined model), and then based on changes (such as displacement, rotation and the like) of the key point features, a virtual object is controlled to undergo correspondingly change so as to achieve the purpose of AR; likewise, recognition of other body parts such as hand recognition is also similar to the facial recognition. Here, the model for performing the key point prediction may be a recognition model for face, hand, leg and the like based on a deep learning network model. For example, in an embodiment scenario of ring try-on, since the ring is generally worn on a finger base, the accessory carrier may be the finger, and the object of the key point prediction may be each finger or finger base. Based on different prediction models, different numbers of key points for each finger or finger base may be respectively predicted, such as 20,36, 48, etc. And certainly, the number of the predicted key points may be set during a model training. Finally, a corresponding key point result is obtained, where the key point result herein may be a two-dimensional (2D) point coordinate result and the like. For example, in key point prediction performed on the finger base, 5×48 key point results (5 finger bases, each with 48 key points) may be finally obtained, and these key point results may reflect the posture of the accessory carrier in the current accessory carrier image. For example, the key point result corresponding to an image where all five fingers are fully spread and not overlapping with each other, and the key point result corresponding to an image where there is partial occlusion between the five fingers, would inevitably have corresponding differences.

Step 102, a six degrees of freedom posture value is determined based on the key point result, a predetermined stereoscopic point data, and a device parameter.

In some embodiments, the six degrees of freedom posture value refers to a 6D posture value, where 6D refers to 6 degrees of freedom, representing 3 degrees of freedom in translation and 3 degrees of freedom in spatial rotation, together know as pose. The pose is a relative concept, referring to a position and posture in a three-dimensional coordinate system. In relevant technologies, the 6D posture value is typically obtained by iterative calculations using the Perspective-n-Point (PnP) algorithm. Perspective-n-Point (PnP) is a method for solving the motion in 3D to 2D point pair.

In this embodiment, solving the key point result obtained in step 101, the predetermined stereoscopic point data, and the device parameter with the PnP algorithm, may obtain a 6D posture value where a reprojected 2D result of the 3D model corresponding to the set of stereoscopic point data has a minimum error compared to the key point result. This 6D posture value may reflect the overall posture of the accessory carrier in the accessory carrier image (which may generally be the posture of the accessory carrier under the capturing angle reflected by the device parameter). The predetermined stereoscopic point data corresponds to a 3D model, and the 3D model may simulate the accessory carrier. The geometric shape of the 3D model tends to be consistent with the actual shape of the accessory carrier, for example, if the accessory carrier is a finger base, the 3D model may be a cylindrical or polygonal cylinder. And the stereoscopic point data generally corresponds one-to-one with the key point result, that is, if there are 48 key points, there would be 48 stereoscopic point data. In a specific embodiment, taking the ring accessory as an example, when performing the try-on of the ring, the accessory carrier is the finger base, and 48 key points may be obtained. Then the 3D model may be a cylinder model corresponding to the finger base, on which 48 points are preset to correspond to the 48 key points, and relevant data (for example, coordinate data, normal vector data, etc.) of the 48 points are the stereoscopic point data. The device parameter may be understood as a parameter of an image acquisition device, including both the internal parameter and external parameters of the image acquisition device, where the image acquisition device may be a virtual camera, and the device parameter may be a setting parameter of the virtual camera. Taking a camera as an example, after obtaining an image, this image may necessarily correspond to a set of device parameters (camera external parameters such as a capturing angle, capturing distance, capturing point, etc. as well as camera internal parameters like a focal length of the camera itself). The device parameter may be obtained directly from the image acquisition device, or may be obtained by back-calculation in real time according to the obtained image.

Step 103, a posture of a virtual accessory carrier model is adjusted based on the six degrees of freedom posture value, wherein the at least one virtual accessory carrier model is mounted with a virtual accessory model, and obtaining an accessory image of the virtual accessory model after posture adjustment based on the device parameter.

In some embodiments, the virtual accessory carrier model may correspond to the accessory carrier, the finger accessory carrier corresponding to a cylindrical virtual accessory carrier model, the ear accessory carrier corresponding to a virtual accessory carrier model with ear contour, and so on. In some embodiments, the virtual accessory carrier model may be the same model as the 3D model mentioned in the embodiment of step 102, so as to facilitate the conversion or transfer of parameters such as the 6D posture value and the device parameter between different steps. Certainly, the number of virtual accessory carrier models may correspond to the number of accessory carriers appearing in the accessory carrier image, for example, one finger may correspond to one cylindrical virtual accessory carrier model, two fingers may correspond to two cylindrical virtual accessory carrier models, and so on. The virtual accessory model may correspond to the accessory that the user needs to wear, which is generally pre-selected by the user. For example, if the user selects a ring, the model corresponding to the ring may be a virtual accessory model. And the virtual accessory model may be generally mounted on a corresponding virtual accessory carrier model, for example, the ring model may be mounted on a model corresponding to a finger, and the earring model may be mounted on a model corresponding to an ear. Then, the different virtual accessory models may correspond to different mounting manners. Since the virtual accessory model may be determined in advance, the carrier and the wearing manner of the accessory may also be relatively fixed. Furthermore, the mounting manner of each virtual accessory model may also be defined in advance, for example, the ring is tightly wrapped on the virtual accessory carrier model corresponding to the finger. And certainly, in some embodiments, the finger on which the ring is mounted may change, for example, from the virtual accessory carrier model corresponding to the ring finger to the virtual accessory carrier model corresponding to the middle finger, but it would be necessarily mounted on the virtual accessory carrier model of the finger.

After that, the posture of the virtual accessory carrier model is adjusted based on the six degrees of freedom posture value, so that the reflected posture corresponds to the posture of the accessory carrier in the accessory carrier image. Then, according to the pose information of the image acquisition device reflected by the device parameter when obtaining the accessory carrier image, image acquisition is performed on the virtual accessory model under the current posture, so as to obtain the corresponding accessory image. It may be seen that, since there may be a plurality of virtual accessory carrier models, such as the virtual accessory carrier models corresponding to the fingers, furthermore according to different postures and the pose of the image acquisition device corresponding to the device parameter, there may exist an occlusion relationship between different virtual accessory carrier models as well as between the plurality of virtual accessory carrier models and the virtual accessory model from the view angle of the image acquisition device; meanwhile, since the virtual accessory model may be set on one or several specific virtual accessory carrier models, the virtual accessory carrier model that sets the virtual accessory model may also cause occlusion on the corresponding virtual accessory model; even with the plurality of virtual accessory models, there may also be occlusion between different virtual accessory models, etc. In this embodiment, in order to generate the image of the virtual accessory, the occlusion of the virtual accessory model is mainly focused on. Therefore, the virtual accessory model may be occluded by the virtual accessory carrier model or other virtual accessory models, finally causing some or all of each virtual accessory model to have invisible parts in the current view angle and the current posture. As a result, the accessory image captured by the image acquisition device may only contain the visible part of the virtual accessory model in the current pose. Since the pose of the virtual accessory carrier model is adjusted under six degrees of freedom posture value, it may correspond to the pose of the accessory carrier in the accessory carrier image, so that the position relationship (for example, the occlusion relationship between the virtual accessory and the accessory carrier) corresponding to the accessory carrier in the accessory carrier image would be well simulated by the virtual accessory carrier model in the final obtained accessory image, the accessory in the obtained accessory image shows a posture that fits the current accessory carrier better.

In some embodiments, a plurality of virtual accessory models may be set on the same virtual accessory carrier model according to specific requirements, and the virtual accessory models may be mounted on the plurality of virtual accessory carrier models respectively. For example, a plurality of rings may be worn on the same finger, or several fingers may simultaneously wear rings, and the like. In some embodiments, there may be a plurality of virtual accessory carrier models, where part of the virtual accessory carrier model may be mounted with the virtual accessory model, while part of the virtual accessory carrier model may not be mounted with the virtual accessory model, for example, among several fingers, only part of fingers wear a ring, and the like.

In step 104, the accessory image is rendered onto the accessory carrier image.

In some embodiments, the final obtained accessory image may be rendered onto the accessory carrier image, causing the accessory carrier therein to present the effect of wearing the virtual accessory. In some embodiments, since the accessory carrier image may be a single-frame image or a multi-frame image, when rendering the multi-frame image, each frame of the accessory carrier image may be rendered one by one, and then displayed frame-by-frame, so as to complete the processing of the multi-frame image. After obtaining the re-rendered accessory carrier image, an output operation may be performed on the re-rendered accessory carrier image. It may be used to store, display, use, or reprocess the re-rendered accessory carrier image. The specific output manner for the accessory carrier image may be flexibly selected according to different application scenarios and implementation needs.

For example, for an application scenario where the method of the embodiment is performed on a single device, the accessory carrier image may be directly output on display means (such as a display, projector, etc.) of the current device in a displayed manner, so that an operator of the current device may directly see the content of the accessory carrier image from the display means.

For another example, for an application scenario where the method of the embodiment is performed on a system composed of multiple devices, the accessory carrier image may be sent to other predetermined devices in the system that serve as a receiver, that is, the synchronization terminal, by any data communication manners (such as wired connection, NFC, Bluetooth, Wi-Fi, cellular mobile network, etc.), so that the synchronization terminal may perform subsequent processing on the accessory carrier image. Optionally, the synchronization terminal may be a predetermined server, that is generally set in the cloud as a data processing and storage center, which may store and distribute the accessory carrier image; where the receiver of the distribution is a terminal device, and a holder or operator of the terminal device may be a potential purchaser of the accessory, a current owner of the accessory, an operator or owner of the application, and the like.

For another example, for an application scenario where the method of the embodiment is performed on a system composed of multiple devices, the accessory carrier image may be directly sent to a predetermined terminal device by any data communication manners, and the terminal device may be one or more of those listed in the previous paragraph.

As may be seen from the above, the method for image rendering provided by the application includes: obtaining an accessory carrier image, and performing key point prediction on the accessory carrier image to generate a key point result; determining a six degrees of freedom posture value based on the key point result, a predetermined stereoscopic point data, and a device parameter; adjusting a posture of a virtual accessory carrier model based on the six degrees of freedom posture value, where the at least one virtual accessory carrier model is mounted with a virtual accessory model, and obtaining an accessory image of the virtual accessory model after posture adjustment based on the device parameter; rendering the accessory image onto the accessory carrier image. In this application, the key point and the six degrees of freedom posture value of the accessory carrier are determined, the posture of the virtual accessory carrier model is adjusted by the six degrees of freedom posture value, so as to simulate the real posture of the accessory carrier. And then the image of the virtual accessory model is obtained based on the image acquisition device set by the device parameter, simulating the real wearing effect of the accessory at a specific angle, finally enhancing the rendering effect of the accessory worn by the carrier during occlusion and motion, such that the virtual accessory may be well fitted under the condition of severe self-occlusion or rapid motion, thus improving the user experience during the try-on process.

In some embodiments, obtaining the accessory image of the virtual accessory model after posture adjustment based on the device parameter includes: performing the posture adjustment on each virtual accessory carrier model based on the six degrees of freedom posture value to determine an occlusion relationship between the virtual accessory model and the virtual accessory carrier model; and obtaining, based on capturing angle determined by the device parameter, the accessory image of the virtual accessory model after occlusion processing based on the occlusion relationship.

In some embodiments, when the accessory carrier is a finger or other parts, since there may be a plurality of fingers in the image, the corresponding virtual accessory carrier model may also need to correspond to the number of fingers. If existing a plurality of virtual accessory carrier models, each virtual accessory carrier model may be adjusted to a corresponding position based on the corresponding six degrees of freedom posture value. And then, in the capturing angle of the virtual image acquisition device set by the corresponding device parameter, each virtual accessory carrier model may cause occlusion to the virtual accessory model. And even when existing the plurality of virtual accessory models, occlusion may also be caused between different virtual accessory models, forming an occlusion relationship between the virtual accessory model and the virtual accessory carrier model, finally causing some or all parts of each virtual accessory model existing the invisible part under the current viewing angle and the current posture. As a result, the accessory image captured by the image acquisition device may only contain the visible part of the virtual accessory model in the current pose. Furthermore, obtaining the accessory image of the virtual accessory model under occlusion conditions may fit the accessory carrier under the occlusion condition better, making the imaging of the virtual accessory more realistic.

In some embodiments, obtaining the accessory carrier image further includes: obtaining an input image, performing accessory carrier recognition on the input image; and in response to recognizing the accessory carrier, cropping the input image based on a position of the accessory carrier, and performing normalization processing on the cropped input image to obtain the accessory carrier image.

In some embodiments, the user generally may not be able to directly provide an image containing only the accessory carrier, and what is generally provided may be images or videos with backgrounds and other body parts. For example, the user may not be able to directly provide an image with only a hand or a finger, instead, and what is generally provided may be captured videos or images of hands that contain a background. In such case, the input images of these inputs need to be processed first. First, it is necessary to determine whether there is a required accessory carrier in the input image. If not, the process directly returns or ends the task. If the accessory carrier is recognized, the area where the accessory carrier is located may be first positioned with the detection model, and the image may be cropped for an image containing the accessory carrier. And then normalization processing may be performed to finally obtain the accessory carrier image. The normalization processing herein may correspond to the accessory carrier with a mirror carrier, such as left and right hand, left and right ears, and the like. For these accessory carriers, for convenience of unified calculation later, one side may be determined as the reference, and the image of the other side accessory carrier may be flipped, so that the accessory carrier is unified. Taking the left and right hands as an example, the right hand image may be set as the reference, and when the left hand image is obtained, the left hand image may be flipped to obtain a mirror image of the left hand image. That is, performing the normalization processing on the cropped input image to obtain the accessory carrier image includes: in response to the accessory carrier being a mirror carrier of a predetermined standard carrier, flipping the cropped input image to obtain the accessory carrier image.

In some embodiments, performing the accessory carrier recognition on the input image includes: determining whether the accessory carrier is recognized in a previous frame input image for the input image; and in response to recognizing the accessory carrier, cropping the input image based on the positioning of the accessory carrier in the previous frame input image.

In some embodiments, when there are a plurality of accessory carrier images, that is, the accessory carrier image is an image sequence (for example, a video, etc.), for quickly positioning the accessory carrier, after obtaining the input image, it may be first determined whether the accessory carrier has been detected in the previous frame input image for the input image, and if it is recognized, then during the processing of the previous frame, the corresponding area must have been cropped. And since the interval time between the two frames of images may be short, the accessory carrier may not move significantly, so that the current frame input image may be directly cropped based on the positioning and cropping position of the previous frame, thereby improving the processing efficiency of the image. In some embodiments, cropping the current frame input image based on positioning and cropping position of the previous frame, may be, cropping the current frame input image directly at the same position according to the positioning of the previous frame; or may be appropriately adjusted on the basis of the positioning of the previous frame, and then cropping, for example, performing appropriate scaling up, scaling down, fine-tuning of the position (which may be based on a motion trend, etc. ), and the like.

In some embodiments, obtaining the accessory carrier image includes: in response to obtaining a request for adding a virtual accessory, determining an accessory carrier corresponding to the virtual accessory, and generating prompt information for the accessory carrier, enabling the accessory carrier to move and/or adjust its posture based on the prompt information; and obtaining an image of the accessory carrier through an image acquisition device to generate the accessory carrier image.

In some embodiments, when the user browses the introduction page of a certain accessory, the user may want to try on the accessory, to this end, a trigger area or a trigger button may be set on the current page. When the user triggers the trigger area or the trigger button, it is considered that the user performs a request operation to add the virtual accessory, and the accessory browsed by the user corresponding to the virtual accessory. First, it may be determined what type of accessory carrier is required corresponding to the virtual accessory, for example, the virtual earring accessory corresponds to the ear as the accessory carrier; and the virtual ring accessory corresponds to the finger as the accessory carrier. After determining the corresponding accessory carrier, prompt information may be generated according to a predetermined wearing posture, to prompt the user to make a corresponding posture movement with the accessory carrier. Then, the accessory carrier that has made the corresponding movement may be obtained with the image acquisition device, so as to finally generate the corresponding accessory carrier image. Therefore, the posture reference may be provided for the user to wear corresponding accessories, so that the final virtual accessory image may be more easily fit onto the accessory carrier image, simplifying the calculation and model adjustment processes, and improving overall efficiency.

In some embodiments, performing the key point prediction on the accessory carrier image includes: performing the key point prediction on the accessory carrier image based on a predetermined key point prediction model.

In some embodiments, for the prediction of key points, the corresponding key point prediction model may be utilized for prediction. The key point prediction model may be a learning model that may able to recognize and predict, such as a deep learning network model. The key point prediction model may be trained by the following methods: obtaining a training image and a target model corresponding to the training image; projecting, based on the device parameter and a standard six degrees of freedom posture value, the training stereoscopic point data on the target model to obtain a key point ground truth value; training the key point prediction model with the training image and the key point ground true value until a predetermined training condition is met. The training image and the target model are the predetermined training image and the corresponding accurate target model, where the training image generally contains an image of the training accessory carrier, and the target model is a training 3D model capable of simulating the accessory carrier. By the corresponding device parameter, the stereoscopic point data (e.g., 3D point data) on the target model is projected based on the standard six degrees of freedom posture values, to obtain the corresponding 2D plane point data, that is, the key point ground truth. The number of the stereoscopic point data is the same as the number of the data of the key point result required for training, and the positions of the stereoscopic point data correspond one-to-one with the positions of the key point results. Then, the key point prediction model is trained according to the training image and the obtained key point ground truth value until a predetermined training condition is met.

In some embodiments, if the accessory carrier image is an image sequence, the generation of the key point result includes: performing smoothing processing on the key point result based on optical flow information and/or temporal information of the accessory carrier image.

In some embodiments, in order to prevent the issues such as sudden shaking of the generated key point results, smoothing processing may be performed on the key point results after they are calculated. Here, the smoothing processing may be performed based on the optical flow information and/or the temporal information of the accessory carrier image. Since the accessory carrier image may be an image sequence with multiple frames, when dealing with the accessory carrier image with multiple frames, due to the need to consider the image coherence between adjacent frames, abrupt changes cannot occur. Therefore, the corresponding smoothing processing may be performed on each frame of image one by one, so that a smooth transition may be performed between the previous and next frames. The manner for smoothing processing may be based on either optical flow information or temporal information, or may be based on both types of the information, and the sequential relationship between the two types of information may be specifically adjusted according to a specific application scenario. In some embodiments, since the smoothing processing may need to be performed, the general smoothing processing is implemented based on the current frame and the previous and following frames of the image sequence, so that there would be a certain image lag phenomenon during processing (to ensure that the current frame has the previous and following frame images). Generally, the current frame may be set to the second previous frame or the third previous frame of the currently obtained image, so that the current frame may have a certain following frame image. For example, if the current frame is the third previous frame of the currently obtained image, the previous frame of the current frame would be the fourth previous frame, and the following frame of the current frame would be the second previous frame.

Then, for the smoothing processing based on the optical flow information, in some embodiments, the key point result of the adjacent frame of the current frame image may be extracted first, a corresponding transformation matrix between the current frame and the adjacent frame may be calculated based on the optical flow method. Then, according to the transformation matrix and the obtained key point result of the adjacent frame, the key point optical flow tracking result of the current frame (that is, the optical flow information of the accessory carrier image) may be obtained. The adjacent frame herein may be the previous frame and/or the following frame of the current frame. Then, the weighted sum of the obtained key point model prediction result of the current frame and the obtained key point optical flow tracking result is performed to obtain a smoothed key point result. The model prediction result refers to a key point result obtained by calculation with a conventional deep learning network, for example, a result of key point prediction with the Stacked Houghglass network, and may be understood herein as a key point result to be smoothed. In specific embodiment, Lucas-Kanade optical flow algorithm (LK optical flow algorithm) may be used to perform smoothing processing based on optical flow information, and the specific formula is as follows:

$$kp2d = \omega * kp_{flow} + (1 - \omega) * kp_{nn}$$

where $kp2d$ is the smoothed key point result, $\omega$ is the weight, $kp_{flow}$ is the key point optical flow tracking result, and $kP_{nn}$ is the key point model prediction result.

For the smoothing processing based on the temporal information, in some embodiments, the temporal information is a temporal set composed of a plurality of frames before and after the current frame, and the smoothing processing may need to perform weighted sum on the key point results corresponding to the temporal set, so as to determine the key point result of the current frame after the temporal smoothing. In a specific application scenario, the smoothing processing may be performed based on a temporal weighting algorithm, and the algorithm formula is as follows, where n is the current frame, n-1 is the previous frame, n+1 is the next frame, and so on. Since delayed frame information is utilized, the final result would require synchronization with a delay of n frames.

$$kp_{smooth} = kp_1 * \omega_1 + kp_2 * \omega_2 + \cdots + kp_{2n+1} * \omega_{2n+1}$$

$$\omega_1 + \omega_2 + \cdots + \omega_{2n+1} = 1$$

where $kP_{smooth}$ is the smooth result of temporal smoothing, $kp_1$ to $kP_{2n+1}$ correspond to the key point results from the frame 1 to the frame 2n+1 respectively, with the frame n being the current frame, and $\omega_1$ to $\omega_{2n+1}$ being the corresponding weights, and the sum of all weights being 1.

Since the smoothing processing based on the optical flow information and the smoothing processing based on the temporal information may be used individually or together, and when the both are used together, the later smoothing processing may be performed based on the result of the previous smoothing processing. For example, the smoothing processing based on the optical flow information is performed first, and the obtained key point result of the current frame may be directly used as the key point result for the current frame when the smoothing processing based on the temporal information is performed later.

Although the smoothing performed by the foregoing manner may cause a slight delay in the image (which may be specifically set, for example, setting the delay of 3 frame images, etc.), the smoothed result may not cause issues such as jitter, preventing the problem of accessory jitter during subsequent rendering.

In some embodiments, determining the six degrees of freedom posture value based on the key point result, the predetermined stereoscopic point data, and the device parameter includes: projecting, based on the device parameter, the stereoscopic point data to obtain a projection result; calculating an error value between the projection result and the key point result; and adjusting the stereoscopic point data, recalculating the error value, and obtaining by calculating, based on the stereoscopic point data corresponding to a minimum error value, the six degrees of freedom posture value.

In some embodiments, the calculation of six degrees of freedom posture value (6D posture value) may be solved by a solution of the Perspective-n-Point (PnP) problem. The projection result is a reprojection 2D result of the 3D model corresponding to the stereoscopic point data. Then, the error value between the projection result and the key point result is calculated. After that, the stereoscopic point data is adjusted, the error value is repeatedly calculated, thus performing the iterative calculation to obtain the stereoscopic point data corresponding to the minimum error value. And the six degrees of freedom posture value of the current 3D model may be derived according to the stereoscopic point data, that is, the corresponding 3D model.

In some embodiments, after obtaining by calculating the six degrees of freedom posture value, the method further includes: performing smoothing processing on a rotation value in the six degrees of freedom posture value with an interpolation algorithm, and/or performing smoothing processing on a translation value in the six degrees of freedom posture value with a temporal weighted algorithm.

In some embodiments, similar to the embodiment mentioned above, in order to prevent a problem such as sudden jitter in the generated six degrees of freedom posture value, the smoothing processing may also be performed on the six degrees of freedom posture value after it is calculated. Since the six degrees of freedom posture value generally includes three degrees of freedom for rotation values and three degrees of freedom for translation values, the three degrees of freedom for rotation values may be smoothed with interpolation algorithm, and the three degrees of freedom for translation values may be smoothed with temporal weighting algorithm similar to the foregoing embodiment. In specific embodiment, taking the spherical linear interpolation algorithm of the interpolation algorithm as an example, the spherical linear interpolation algorithm, known as Slerp interpolation algorithm, and the spherical linear interpolation (Sphere linear interpolation, Slerp) is a linear interpolation operation for quaternions, primarily mainly used for smoothing interpolation between two quaternions representing rotation.

In specific embodiment, for the three degrees of freedom translation values, a weighted sum may be performed on the three translation values corresponding to several frames before and after the current frame (for example, from the frame 1 to the frame 2n+1, where the frame n is the current frame), so as to smooth the three translation values of the current frame. The specific formula may be similar to the algorithm formula in the foregoing embodiment. For the three degrees of freedom rotation values, the final smoothed rotation value may be obtained with the Slerp interpolation algorithm based on the rotation quaternion of the previous frame and the current frame, combined with the difference weight calculated by the two rotation quaternions. The specific formula is as follows:

$$\begin{cases} r = a(t)p + b(t)q \\ a(t) = \dfrac{cos\theta - cos[(1-t)\theta]cos\theta}{1 - cos^2\theta} \\ b(t) = \dfrac{cos[(1-t)\theta] - cos\theta cos\theta}{1 - cos^2\theta} \end{cases}$$

where r is the smoothed rotation value, p and q are the rotation quaternions of the previous frame and the current frame, respectively, t is the difference weight, and $\theta$ is the angle between p and q.

It should be noted that, in some other embodiments, since other numerical values may be smoothed in advance, for example, the key point result may be smoothed during the calculation of the key point result. Since the key point result is mainly the calculation on the plane, it may primarily affect the translation value. Therefore, if the key point result has been smoothed already, the smoothing processing for the three degrees of freedom translation values may be omitted when smoothing the six degrees of freedom posture value, and only the smoothing processing for the three degrees of freedom rotation values is performed. Certainly, if the corresponding parameters primarily affecting the rotation values have already been smoothed in a preceding step, the smoothing processing for the three degrees of freedom rotation values may also be omitted here, and only the smoothing processing for the three degrees of freedom translation values may need to be performed. Even if the both have been smoothed in the preceding step, the smoothing processing for the six degrees of freedom posture value may also be omitted here.

It should be noted that the method in the embodiment of the application may be performed by a single device, for example, a computer or a server. The method in the embodiment of the application may also be applied in a distributed scenario, where multiple devices cooperate with each other to complete the method. In this distributed scenario, one of the plurality of devices may execute only one or more steps of the method in the embodiments of this application, and the plurality of devices interact with each other to complete the method.

It should be noted that the foregoing describes a specific embodiment of this application. Other embodiments are within the scope of the appended claims. In some circumstances, the actions or steps recited in the claims may be performed in a different order than in the above embodiments and still achieve the desired results. Additionally, the processes depicted in the drawings do not necessarily require a particular order or continuous order shown to achieve the desired results. In certain embodiments, multitasking and parallel processing are also possible or may be advantageous.

Based on the same concept, the application further provides an apparatus for image rendering corresponding to the foregoing embodiment method.

Referring to FIG. 2, the apparatus for image rendering includes:

an obtaining module 210, configured to obtain an accessory carrier image, and performing key point prediction on the accessory carrier image to generate a key point result.

a calculation module 220, configured to determine a six degrees of freedom posture value based on the key point result, a predetermined stereoscopic point data, and a device parameter.

an adjusting module 230, configured to adjust a posture of a virtual accessory carrier model based on the six degrees of freedom posture value, wherein the at least one virtual accessory carrier model is mounted with a virtual accessory model, and obtaining an accessory image of the virtual accessory model after posture adjustment based on the device parameter.

a rendering module 240, configured to render the accessory image onto the accessory carrier image.

For convenience of description, the above apparatus is described by dividing with functions into various modules. Certainly, when implementing the embodiments of this application, functions of each module may be implemented in the same or a plurality of software and/or hardware.

The apparatus of the foregoing embodiment is configured to implement the corresponding image rendering method in the foregoing embodiments, and has the beneficial effects of the corresponding method embodiments, and details are not described herein again.

In some embodiments, the adjusting module 230 may further be configured to:
obtaining the accessory image of the virtual accessory model after posture adjustment based on the device parameter includes:

performing the posture adjustment on each virtual accessory carrier model based on the six degrees of freedom posture value to determine an occlusion relationship between the virtual accessory model and the virtual accessory carrier model;

obtaining, based on capturing angle determined by the device parameter, the accessory image of the virtual accessory model after occlusion processing based on the occlusion relationship.

In some embodiments, the obtaining module 210 may further be configured to:

obtaining an input image, performing accessory carrier recognition on the input image;
in response to recognizing the accessory carrier, cropping the input image based on a position of the accessory carrier, and performing normalization processing on the cropped input image to obtain the accessory carrier image.

In some embodiments, the obtaining module 210 may further be configured to:
in response to the accessory carrier being a mirror carrier of a predetermined standard carrier, flipping the cropped input image to obtain the accessory carrier image.

In some embodiments, the obtaining module 210 may further be configured to:

determining whether the accessory carrier is recognized in a previous frame input image for the input image;
in response to recognizing the accessory carrier, cropping the input image based on the positioning of the accessory carrier in the previous frame input image.

In some embodiments, the obtaining module 210 may further be configured to:

in response to obtaining a request for adding a virtual accessory, determining an accessory carrier corresponding to the virtual accessory, and generating prompt information for the accessory carrier, enabling the accessory carrier to move and/or adjust its posture based on the prompt information;
obtaining an image of the accessory carrier through an image acquisition device to generate the accessory carrier image.

In some embodiments, the obtaining module 210 may further be configured to:
performing the key point prediction on the accessory carrier image based on a predetermined key point prediction model.

In some embodiments, the method further includes training the key point prediction model by the following methods:

obtaining a training image and a target model corresponding to the training image;
projecting, based on the device parameter and a standard six degrees of freedom posture value, the training stereoscopic point data on the target model to obtain a key point ground truth value;
training the key point prediction model with the training image and the key point ground true value until a predetermined training condition is met.

In some embodiments, if the accessory carrier image is an image sequence, the obtaining module 210 may further be configured to:
performing smoothing processing on the key point result based on optical flow information and/or temporal information of the accessory carrier image.

In some embodiments, the calculation module 220 may further be configured to:

projecting, based on the device parameter, the stereoscopic point data to obtain a projection result;
calculating an error value between the projection result and the key point result;
adjusting the stereoscopic point data, recalculating the error value, and obtaining by calculating, based on the stereoscopic point data corresponding to a minimum error value, the six degrees of freedom posture value.

In some embodiments, the calculation module 220 may further be configured to:
performing smoothing processing on a rotation value in the six degrees of freedom posture value with an interpolation algorithm, and/or performing smoothing processing on a translation value in the six degrees of freedom posture value with a temporal weighted algorithm.

Based on the same concept, the application further provides an electronic device, including a memory, a processor, and a computer program stored in the memory and executable on the processor, where the program, when executed by the processor, performs the method for the image rendering according to any one of embodiments described above.

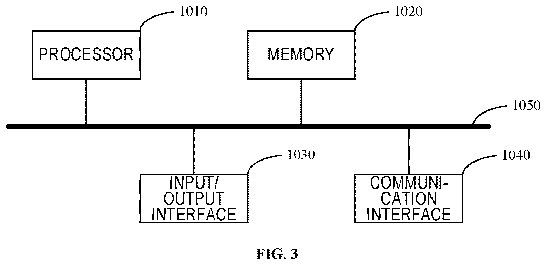

FIG. 3 illustrates a more specific schematic diagram for hardware structure of the electronic device provided by this embodiment, and the device may include: a processor 1010, a memory 1020, an input/output interface 1030, a communications interface 1040, and a bus 1050. Where the processor 1010, memory 1020, input/output interface 1030, and the communications interface 1040 are communicatively connected to each other within the device via the bus 1050.

The processor 1010 may be implemented with a general- purpose central processing unit (CPU), a microprocessor, an application specific integrated circuit (ASIC), or one or more integrated circuits, and is configured to execute related programs to implement the technical solutions provided in the embodiments of the specification.

The memory 1020 may be implemented in a form of a ROM (Read Only Memory), a Random Access Memory (RAM), a static storage device, a dynamic storage device, or the like. The memory 1020 may store an operating system and other applications. When the technical solutions provided by the embodiments of this specification are implemented by software or firmware, the related program code is stored in the memory 1020 and is called and executed by the processor 1010.

The input/output interface 1030 is configured to connect the input/output module to implement information input and output. The input/output module may be configured as a component in the device (not shown in the drawings), or may be externally connected to the device to provide a corresponding functionality. The input device may include a keyboard, a mouse, a touch screen, a microphone, various sensors, and the like, and the output device may include a display, a speaker, a vibrator, an indicator light, and the like.

The communications interface 1040 is configured to connect a communications module (not shown in the drawings), to implement communications interaction between the device and another device. The communications module may implement communications in a wired manner (for example, a USB or a network cable), or may implement communications in a wireless manner (for example, a mobile network, a Wi-Fi, a Bluetooth, and the like).

The bus 1050 includes a path to transfer information between various components of the device (such as the processor 1010, the memory 1020, the input/output interface 1030, and the communication interface 1040).

It should be noted that although the foregoing device only shows the processor 1010, the memory 1020, the input/output interface 1030, the communications interface 1040, and the bus 1050, the device may alos include other components necessary for normal running in specific implementation process. In addition, those skilled in the art may understand that the foregoing device may also include only components necessary for implementing the solutions in the embodiments of the specification, and does not have to include all components shown in the drawings.

The electronic device of the foregoing embodiment is configured to implement the corresponding image rendering method in any one of the foregoing embodiments, and has the beneficial effects of the corresponding method embodiments, and details are not described herein again.

Based on the same concept, the application further provides a non-transitory computer-readable storage medium storing computer instructions for causing the computer to perform the method for image rendering according to any one of the embodiments described above.

Computer-readable media for the embodiments include permanent and non-permanent, removable and non-removable media, which may be implemented by any method or technology for information storage. The information may be computer readable instructions, data structures, modules of a program, or other data. Examples of computer storage media include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read-only memory (CD-ROM), digital versatile disc (DVD) or other optical storage, magnetic cassettes, magnetic tape magnetic disk storage or other magnetic storage devices, or any other non-transmission medium, which may store information that may be accessed by a computing device.

The computer instructions stored in the storage medium in the foregoing embodiments are configured to cause the computer to perform the image rendering method according to any one of the foregoing embodiments, and have the beneficial effects of the corresponding method embodiments, and details are not described herein again.

It should be understood by those of ordinary skill in the art that the foregoing discussion of any embodiment is merely an example, and is not intended to imply that the scope of the application (including the claims) is limited to these examples; in the spirit of this application, the above embodiments or the technical features in different embodiments may also be combined, and the steps may be implemented in any order, and there are many other changes in different aspects of the embodiments of this application as described above.

Additionally, for simplicity of illustration and discussion, and to avoid making the embodiments of this application difficult to understand, well-known power/ground connections to integrated circuit (IC) chips and other components may or may not be shown in the drawings provided. Furthermore, the apparatus may be shown in block diagram form in order to avoid obscuring the embodiments of the application, and this also takes into account the fact that the details of the embodiments of these block diagram devices are highly dependent on the platform on which the embodiments of this application will be implemented (i.e., these details should be fully within the understanding of those skilled in the art). It will be apparent to those skilled in the art that the embodiments of this application may be implemented without these specific details or with variations of these specific details, even after describing the specific details (e.g., circuits) to illustrate the example embodiments of this application. Therefore, these descriptions should be considered as illustrative rather than limiting.

Although the application has been described in conjunction with specific embodiments in the application, many alternatives, modifications and variations of these embodiments will be apparent to those of ordinary skill in the art from the foregoing description. For example, other memory architectures (e.g., dynamic RAM (DRAM)) may use the embodiments discussed.

This application is intended to cover all such alternatives, modifications and variations that fall within the broad scope of the appended claims. Therefore, any omission, modification, equivalent replacement, improvement and the like within the spirit and principle of the embodiments of this application should be included within the protection scope of this application.

**EP 4 668 218 A1**

Claims

1. A method for image rendering, comprising:

   obtaining an accessory carrier image, and performing key point prediction on the accessory carrier image to generate a key point result;
   determining a six degrees of freedom posture value based on the key point result, a predetermined stereoscopic point data, and a device parameter;
   adjusting a posture of a virtual accessory carrier model based on the six degrees of freedom posture value, wherein the at least one virtual accessory carrier model is mounted with a virtual accessory model, and obtaining an accessory image of the virtual accessory model after posture adjustment based on the device parameter;
   rendering the accessory image onto the accessory carrier image.

2. The method of claim 1, wherein obtaining the accessory image of the virtual accessory model after posture adjustment based on the device parameter comprises:

   performing the posture adjustment on each virtual accessory carrier model based on the six degrees of freedom posture value to determine an occlusion relationship between the virtual accessory model and the virtual accessory carrier model;
   obtaining, based on capturing angle determined by the device parameter, the accessory image of the virtual accessory model after occlusion processing based on the occlusion relationship.

3. The method of claim 1, wherein obtaining the accessory carrier image further comprises:

   obtaining an input image, performing accessory carrier recognition on the input image;
   in response to recognizing the accessory carrier, cropping the input image based on a position of the accessory carrier, and performing normalization processing on the cropped input image to obtain the accessory carrier image.

4. The method of claim 3, wherein performing the normalization processing on the cropped input image to obtain the accessory carrier image comprises:
   in response to the accessory carrier being a mirror carrier of a predetermined standard carrier, flipping the cropped input image to obtain the accessory carrier image.

5. The method of claim 3, wherein performing the accessory carrier recognition on the input image comprises:

   determining whether the accessory carrier is recognized in a previous frame input image for the input image;
   in response to recognizing the accessory carrier, cropping the input image based on the positioning of the accessory carrier in the previous frame input image.

6. The method of claim 1, wherein obtaining the accessory carrier image comprises:

   in response to obtaining a request for adding a virtual accessory, determining an accessory carrier corresponding to the virtual accessory, and generating prompt information for the accessory carrier, enabling the accessory carrier to move and/or adjust its posture based on the prompt information;
   obtaining an image of the accessory carrier through an image acquisition device to generate the accessory carrier image.

7. The method of claim 1, wherein performing the key point prediction on the accessory carrier image comprises:
   performing the key point prediction on the accessory carrier image based on a predetermined key point prediction model.

8. The method of claim 7, wherein the method further comprises training the key point prediction model by the following methods:

   obtaining a training image and a target model corresponding to the training image;
   projecting, based on the device parameter and a standard six degrees of freedom posture value, the training stereoscopic point data on the target model to obtain a key point ground truth value;

training the key point prediction model with the training image and the key point ground true value until a predetermined training condition is met.

9. The method of claim 1, wherein if the accessory carrier image is an image sequence, the generation of the key point result comprises:
performing smoothing processing on the key point result based on optical flow information and/or temporal information of the accessory carrier image.

10. The method of claim 1, wherein determining the six degrees of freedom posture value based on the key point result, the predetermined stereoscopic point data, and the device parameter comprises:

projecting, based on the device parameter, the stereoscopic point data to obtain a projection result;
calculating an error value between the projection result and the key point result;
adjusting the stereoscopic point data, recalculating the error value, and obtaining by calculating, based on the stereoscopic point data corresponding to a minimum error value, the six degrees of freedom posture value.

11. The method of claim 10, wherein after obtaining by calculating the six degrees of freedom posture value, the method further comprises:
performing smoothing processing on a rotation value in the six degrees of freedom posture value with an interpolation algorithm, and/or performing smoothing processing on a translation value in the six degrees of freedom posture value with a temporal weighted algorithm.

12. An apparatus for image rendering, comprising:

an obtaining module, configured to obtain an accessory carrier image, and performing key point prediction on the accessory carrier image to generate a key point result;
a calculation module, configured to determine a six degrees of freedom posture value based on the key point result, a predetermined stereoscopic point data, and a device parameter;
an adjusting module, configured to adjust a posture of a virtual accessory carrier model based on the six degrees of freedom posture value, wherein the at least one virtual accessory carrier model is mounted with a virtual accessory model, and obtaining an accessory image of the virtual accessory model after posture adjustment based on the device parameter;
a rendering module, configured to render the accessory image onto the accessory carrier image.

13. An electronic device, comprising a memory, a processor, and a computer program stored in the memory and executable on the processor, wherein the program, when executed by the processor, performs the method of any of claims 1 to 11.

14. A non-transitory computer-readable storage medium storing computer instructions for causing the computer to perform the method of any of claims 1 to 11.

101 ── OBTAIN AN ACCESSORY CARRIER IMAGE, AND PERFORMING KEY POINT PREDICTION ON THE ACCESSORY CARRIER IMAGE TO GENERATE A KEY POINT RESULT

102 ── DETERMINE A SIX DEGREES OF FREEDOM POSE VALUE BASED ON THE KEY POINT RESULT, A PREDETERMINED STEREOSCOPIC POINT DATA, AND A DEVICE PARAMETER

103 ── ADJUST A POSE OF A VIRTUAL ACCESSORY CARRIER MODEL BASED ON THE SIX DEGREES OF FREEDOM POSE VALUE, WHEREIN THE AT LEAST ONE VIRTUAL ACCESSORY CARRIER MODEL IS MOUNTED WITH A VIRTUAL ACCESSORY MODEL, AND OBTAINING AN ACCESSORY IMAGE OF THE VIRTUAL ACCESSORY MODEL AFTER POSE ADJUSTMENT BASED ON THE DEVICE PARAMETER

104 ── RENDER THE ACCESSORY IMAGE ONTO THE ACCESSORY CARRIER IMAGE

**FIG. 1**

210 OBTAINING MODULE

220 CALCULATION MODULE

230 ADJUSTING MODULE

240 RENDERING MODULE

**FIG. 2**

**FIG. 3**

## INTERNATIONAL SEARCH REPORT

| International application No. |
|---|
| **PCT/CN2024/076622** |

| A. | CLASSIFICATION OF SUBJECT MATTER |
|---|---|

G06T19/20(2011.01)i

According to International Patent Classification (IPC) or to both national classification and IPC

| B. | FIELDS SEARCHED |
|---|---|

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, IEEE, ISI, CNKI: 图像, 渲染, 配饰, 载体, 关键点, 姿态, 调整, 模型, 遮挡, image, render, accessor+, carrier, key W point, pose, adjust, model, cover

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114445601 A (BEIJING DATIAN SOFT WHITE SUGAR TECHNOLOGY CO., LTD.) 06 May 2022 (2022-05-06) description, paragraphs [0034]-[0079], and claims 17-18 | 1-14 |
| A | CN 110363867 A (YUTOU TECHNOLOGY (HANGZHOU) CO., LTD.) 22 October 2019 (2019-10-22) entire document | 1-14 |
| A | CN 113191843 A (BEIJING SENSETIME SCIENCE TECHNOLOGY DEVELOPMENT CO., LTD.) 30 July 2021 (2021-07-30) entire document | 1-14 |
| A | CN 113763440 A (TENCENT TECHNOLOGY (SHENZHEN) CO., LTD.) 07 December 2021 (2021-12-07) entire document | 1-14 |

☐ Further documents are listed in the continuation of Box C.   ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T" later document published after the international filing date or priority date and not in conflict with the application but cited to understand the principle or theory underlying the invention

"X" document of particular relevance; the claimed invention cannot be considered novel or cannot be considered to involve an inventive step when the document is taken alone

"Y" document of particular relevance; the claimed invention cannot be considered to involve an inventive step when the document is combined with one or more other such documents, such combination being obvious to a person skilled in the art

"&" document member of the same patent family

| Date of the actual completion of the international search | Date of mailing of the international search report |
|---|---|
| **10 April 2024** | **24 April 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

**INTERNATIONAL SEARCH REPORT**
Information on patent family members

International application No.

**PCT/CN2024/076622**

| Patent document cited in search report | | | Publication date (day/month/year) | Patent family member(s) | Publication date (day/month/year) |
|---|---|---|---|---|---|
| CN | 114445601 | A | 06 May 2022 | None | |
| CN | 110363867 | A | 22 October 2019 | None | |
| CN | 113191843 | A | 30 July 2021 | None | |
| CN | 113763440 | A | 07 December 2021 | None | |

Form PCT/ISA/210 (patent family annex) (July 2022)

**EP 4 668 218 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310180477